# EUROPEAN PATENT SPECIFICATION

(11) **EP 0 353 480 B1**
(45) Date of publication and mention of the grant of the patent: **23.08.1995**
(21) Application number: 89112243.4
(22) Date of filing: 05.07.1989
(51) Int. Cl.: F02F 3/10, F02F 3/00, B22D 19/00

(54) **Pistons**
Kolben
Pistons

(30) Priority: 30.07.1988 GB 8818214
(43) Date of publication of application: 07.02.1990
(73) Proprietor: T&N TECHNOLOGY LIMITED, Rugby Warwickshire, CV22 7SB (GB); WELLWORTHY LIMITED, Lymington Hampshire, SO41 8XA (GB)
(72) Inventor: Cole, Andrew Timothy, Rugby CV22 7JP (GB); Munro, Robert, Lymington Hampshire SO41 9GP (GB)
(74) Representative: Hadfield, Robert Franklin

(56) References cited:
- EP-A- 0 109 814
- FR-A- 2 284 769
- GB-A- 2 156 478

## Description

The present invention relates to pistons comprising aluminium-based alloys for internal combustion engines and particularly to such pistons having ferrous components therein.

Components such as ferrous inserts employed to enhance the wear characteristics of piston ring grooves, for example, are often incorporated by use of the well-known Alfin (trade mark) process.

The Alfin process is used in the manufacture of pistons by gravity casting and also by pressure casting methods such as squeeze casting, for example. Several problems can occur with the Alfin process and which can produce unsatisfactory bonds between the insert and the piston alloy. Such problems may include dirty or oxidised insert material, incorrect process conditions giving irregular intermetallic layer thickness and oxide dragged from the melt and entrained in the insert intermetallic surface coating. Furthermore, the Alfin process is not amenable to automation, operator skill being essential in the successful operation of the process.

Even where the bond is not degraded by any of the above defects it is still relatively weak and brittle and may fracture during heat treatment or machining of the piston.

Pistons produced by pressure casting techniques are often intended for the highest rated engines and the aluminium alloy of which they are made is frequently heat treated to optimise the material properties. Heat treatments commonly used include a solution treatment and quenching operation often followed by a precipitation treatment. The solution treatment causes the thickness of the brittle iron-aluminium intermetallic layer to increase by diffusion and become even weaker whilst the thermal shock of the quenching operation either weakens the bond still further or may destroy it altogether. If the bond does not fail during quenching it can fail due to the stresses generated during subsequent heat treatment or machining.

British specification GB-A-775,595 discloses making a laminated article by spraying a surface of a thin ferrous metal plate with a corrosion resistant ductile metal, and pressure die-casting onto said surface a body of aluminium or aluminium alloy.

French specification FR-A-2284769 describes the bonding of a non-porous ring carrier insert within a piston, the remainder of the piston being of an aluminium alloy. The insert is described as being of sintered ferrous material, infiltrated with copper or a copper-based alloy prior to the casting of the piston. There is no disclosure of the use of the advantageous squeeze casting of the aluminium alloy being envisaged. The bond between the insert and the reminder of the piston comprises a conventional so-called Alfin bond.

Kohnert et al in US 4334507 describe a porous insert formed of a porous material and which is impregnated with piston alloy by a pressure casting technique. A problem with this approach is that particles of the material from which the insert is produced may be loosened during machining and become dislodged in service leading to increased wear and damage.

A method has now been discovered of bonding a component in a piston when casting the piston by employing a pressure casting technique, and which method overcomes the disadvantages referred to in the preceding paragraph.

According to the present invention a method of bonding a ferrous component in a piston including in combination the steps of coating the component surfaces to be bonded with a particulate material selected from the group austenitic stainless steels, or nickel-based alloys, or copper-based alloys, or ferritic stainless steel, the layer being formed by a physical vapour deposition technique, preheating the coated component to 400°C, the particulate material being oxidation resistant at least upto the preheating temperature, placing the preheated component in a casting die and then casting an aluminium alloy around the component by a squeeze casting technique, the bond strength between the component and the cast aluminium alloy being in excess of 102.9 MPa.

The component should be in a clean, non-oxidised condition to allow coating with the particulate material. The particulate material may be deposited by a technique such as plasma, arc, flame spraying or other physical vapour deposition process, for example.

The coating thickness may lie in the range of 0.025 to 0.3mm and possibly in the range from 0.05 to 0.15mm in thickness.

The component may be first coated with a tin layer by dipping or electro plating, for example, to enhance the bonding of the subsequent coating during a subsequent heat treatment prior to casting.

The coated component may also undergo a preliminary heat treatment to enhance the bond between the coating and the component prior to casting.

Other components which may be incorporated into a piston by this method include bushes in the gudgeon pin bosses and combustion chamber bowls in the crown.

Components bonded to or into pistons in this manner do not need first to be dipped in molten aluminium as with the Alfin process. Therefore, no initial brittle layer of aluminium-iron intermetallic compound is formed.

It is considered that the method of the present invention will permit heat treatments which allow the optimum properties of the aluminium alloy to be developed and which is not possible with current methods.

In order that the present invention may be more fully understood examples will now be described by way of illustration only.

A piston ring carrier insert of Ni-Resist (trade mark) iron was cleaned by abrasive grit blasting and coated by plasma spraying with 0.12mm thick layer of 316L stainless steel powder. The coated ring carrier was then preheated to 400°C prior to placing in the female portion of a squeeze casting die. Lo-ex (trade mark) aluminium piston alloy at 740 to 760°C was then squeeze cast around the insert. The squeeze-casting pressure of 108.2 x 10⁶ to 154.6 x 10⁶ Pa (7 to 10 tsi) was maintained until complete solidification had taken place.

Samples were taken from the cast piston which gave tensile strengths for the bond having a mean of 126.5 x 10⁶ Pa (126.5 MPa). This gave an 80% strength increase over a typical Alfin bond as formed without any further heat treatment.

Other samples were prepared by the same method but having different sprayed layer thicknesses. The strengths of the interfaces were tested and gave the results shown in the Table below.

| Sprayed Layer Thickness (mm) | UTS (Mpa) |
|---|---|
| 0.025 | 126.8 |
| 0.025 | 119.0 |
| 0.05 | 124.3 |
| 0.05 | 148.5 |
| 0.10 | 120.9 |
| 0.10 | 152.5 |
| 0.20 | 130.8 |
| 0.20 | 117.8 |
| 0.30 | 102.9 |
| 0.30 | 130.2 |

## Claims

1. A method of bonding a ferrous component in a piston the method including in combination the steps of coating the component surfaces to be bonded with a layer of a particulate material selected from the group austenitic stainless steels, or nickel-based alloys, or copper-based alloys, or ferritic stainless steel, the layer being formed by a physical vapour deposition technique, preheating the coated component to 400°C, the particulate material being oxidation resistant at least upto the preheating temperature, placing the preheated component in a casting die and then casting an aluminium alloy around the component by a squeeze casting technique, the bond strength between the component and the cast aluminium alloy being in excess of 102.9 MPa.

2. A method according to claim 1 characterised in that the physical vapour deposition technique comprises plasma, arc or flame spraying.

3. A method according to any one preceding claim characterised in that the component is one or more selected from the group comprising piston ring carrier; gudgeon pin boss bushes, combustion chamber bowl and piston crown.

4. A method according to any one preceding claim characterised in that the material is 316L stainless steel powder.

5. A method according to any one preceding claim characterised in that the layer is between 0.025 and 0.3mm thick.

6. A method according to claim 5 characterised in that the layer is between 0.05 and 0.15mm thick.

7. A method according to any one preceding claim characterised in that the coated component is heat treated prior to the preheating step.

8. A method according to any one preceding claim characterised in that the piston is heat treated subsequently to after casting.

## Patentansprüche

1. Verfahren zum Einbinden eines eisenhaltigen Bauteils in einen Kolben, mit einer Kombination der Schritte des Beschichtens der anzubindenden Bauteiloberflächen mit einer Schicht aus einem aus Partikeln bestehenden Material, das aus der Gruppe austenitischer rostfreier Stähle oder auf Nickel oder auf Kupfer basierender Legierungen oder ferritischer rostfreier Stahl ausgewählt ist, wobei die Schicht mittels einer physikalischen Bedampfungstechnik ausgebildet wird, ferner des Vorwärmens des beschichteten Bauteils auf 400°C, wobei das aus Partikeln bestehende Material wenigstens bis zur Vorwärmtemperatur oxidationsbeständig ist, des Anordnens des vorgewärmten Bauteils in einer Gußform und sodann des Gießens einer Aluminiumlegierung um das Bauteil herum durch eine Preßgußtechnik, wobei die Bindungskraft zwischen dem Bauteil und der gegossenen Aluminiumlegierung mehr als 102,9 MPa beträgt.

2. Verfahren nach Anspruch 1, dadurch gekennzeichnet, daß die physikalische Bedampfungstechnik Plasmaspritzen, Schmelzen im Lichtbogen oder Flammspritzen umfaßt.

3. Verfahren nach einem der vorhergehenden Ansprüche, dadurch gekennzeichnet, daß das Bauteil eins oder mehrere der Elemente umfaßt, die aus der Gruppe ausgewählt sind, die den Kolbenringträger, die Buchsen für Kolbenbolzenaugen, die Brennkammermulde und den Kolbenboden enthält.

4. Verfahren nach einem der vorhergehenden Ansprüche, dadurch gekennzeichnet, daß das Material ein Pulver aus rostfreiem 316L-Stahl ist.

5. Verfahren nach einem der vorhergehenden Ansprüche, dadurch gekennzeichnet, daß die Dicke der Schicht im Bereich von 0,025 bis 0,3 mm liegt.

6. Verfahren nach Anspruch 5, dadurch gekennzeichnet, daß die Dicke der Schicht im Bereich von 0,05 bis 0,15 mm liegt.

7. Verfahren nach einem der vorhergehenden Ansprüche, dadurch gekennzeichnet, daß das beschichtete Bauteil vor dem Vorwärmschritt wärmebehandelt wird.

8. Verfahren nach einem der vorhergehenden Ansprüche, dadurch gekennzeichnet, daß der Kolben nachträglich nach dem Gießen wärmebehandelt wird.

## Revendications

1. Procédé de liaison d'un élément ferreux dans un piston, le procédé comprenant conjointement les phases consistant à revêtir les surfaces de l'élément à lier avec une couche d'un matériau particulaire sélectionné parmi le groupe des aciers inoxydables austénitiques, ou les alliages à base de nickel, les alliages à base de cuivre, ou l'acier inoxydable ferritique, la couche étant formée par déposition physique en phase gazeuse, préchauffer l'élément revêtu jusqu'à 400°C, le matériau particulaire résistant à l'oxydation au moins jusqu'à la température de préchauffage, placer l'élément préchauffé dans un moule de coulage puis couler un alliage d'aluminium autour de l'élément par un procédé de coulage avec compression, la résistance de liaison entre l'élément et l'alliage d'aluminium coulé étant supérieure à 102,9 MPa.

2. Procédé selon la revendication 1, caractérisé en ce que le procédé de déposition physique en phase gazeuse comprend une pulvérisation de plasma, une pulvérisation en arc électrique, ou une pulvérisation au pistolet à flamme.

3. Procédé selon l'une quelconque des revendications précédentes, caractérisé en ce que l'élément ou les éléments sont sélectionnés parmi le groupe consistant en des éléments porteurs de segments de piston, des coussinets de bossages d'axe de pied de bielle, des cuvettes de chambres de combustion et des couronnes de piston.

4. Procédé selon l'une quelconque des revendications précédentes, caractérisé en ce que le matériau est de la poudre d'acier inoxydable 316L.

5. Procédé selon l'une quelconque des revendications précédentes, caractérisé en ce que la couche a une épaisseur dans la plage de 0,025 à 0,3 mm.

6. Procédé selon la revendication 5, caractérisé en ce que la couche a une épaisseur dans la plage de 0,05 à 0,15 mm.

7. Procédé selon l'une quelconque des revendications précédentes, caractérisé en ce que l'élément revêtu est soumis à un traitement thermique avant la phase de préchauffage.

8. Procédé selon l'une quelconque des revendications précédentes, caractérisé en ce que le piston est soumis à un traitement thermique après coulage.
